# EUROPÄISCHE PATENTSCHRIFT

(11) **EP 1 237 741 B1**
(45) Veröffentlichungstag und Bekanntmachung des Hinweises auf die Patenterteilung: **04.08.2004**
(21) Anmeldenummer: 00976029.9
(22) Anmeldetag: 16.11.2000
(51) Int. Cl.: B60G 15/00, B60G 15/06

(54) **FEDERBEINLAGERUNG**
SUSPENSION STRUT BEARING
SUSPENSION A JAMBE DE FORCE

(30) Priorität: 16.12.1999 DE 19960699
(43) Veröffentlichungstag der Anmeldung: 11.09.2002
(73) Patentinhaber: INA-Schaeffler KG, 91074 Herzogenaurach (DE)
(72) Erfinder: PFLÜGNER, Wolfgang, 91074 Herzogenaurach (DE); ZERNICKEL, Alexander, 91074 Herzogenaurach (DE); ERHARDT, Herbert, 91074 Herzogenaurach (DE); WEISS, Jürgen, 91074 Herzogenaurach (DE)
(86) Internationale Anmeldenummer: PCT/EP2000/011327
(87) Internationale Veröffentlichungsnummer: WO 2001/044003

(56) Entgegenhaltungen:
- DE-A- 19 752 269
- FR-A- 2 375 484
- US-A- 4 699 530
- US-A- 5 664 892

## Beschreibung

### Gebiet der Erfindung

Die Radaufhängung bzw. Radführung der gelenkten Vorderräder von Personenkraftfahrzeugen sind versehen mit jeweils einem Federbein. Der Aufbau des Federbeins umfasst einen teleskopartigen Stoßdämpfer und einer diesen umgebenden, als Radfeder dienenden Schraubenfeder, wobei die elastisch an der Fahrzeukarosserie abgestützten Bauteile, der Stoßdämpfer und die Schraubenfeder, in einem Federbeinlager gemeinsam gegenüber der Karosserie, um ihre Längsachse drehbar gelagert sind. Bei einer Lenkbewegung der Räder ermöglicht das Federbeinlager eine Verdrehung zwischen dem Stoßdämpfer und dem mit ihr verbundenen Federteller einerseits und der Karosserie andererseits Das weitere Ende der Schraubenfeder ist drehstarr an dem Stoßdämpfer befestigt. Zur Erzielung eines geringen Verdrehwiderstandes, im Interesse eines geringen zusätzlichen Lenkaufwandes sowie zur Vermeidung einer ungewollten Federtorsion und daraus resultierender Rückstellmomente, ist in dem Federbeinlager ein Wälzlager eingesetzt

### Hintergrund der Erfindung

Eine Vorderradführung bzw. Vorderradaufhängung gemäß der zuvor beschriebenen Art ist aus der DE 29 13 982 A1 bekannt. Auf den oberen Lagerzapfen der Stoßdämpfer-Kolbenstange dieser bekannten Radaufhängung ist ein Axial-Wälzlager befestigt, mit dem eine Verdrehbarkeit des Federbeins gegenüber der Karosserie sichergestellt ist. An dem unteren Ring des Axial-Wälzlagers stützt sich über einen Federteller sowohl die Kolbenstange des Stoßdämpfers als auch gleichzeitig die zugeordnete Schraubenfeder ab Die von dem Stoßdampfer und der Schraubenfeder gemeinsam auf das Walzlager ausgeübten Kräfte werden von dem Wälzlager über ein elastisches Stützlager auf die Karosserie übertragen.

Die aus der gattungsbildenden DE 197 52 269 A1 bekannte Federbeinlagerung schließt zwei Trägerteile ein, zwischen denen ein Wälzlager angeordnet ist. In einem ersten drehfest mit der Karosserie verbunden Trägerteil ist ein Lagerring des Wälzlagers eingesetzt. Das rotationssymmetrisch gestaltete, kreisringförmige Trägerteil besitzt außenseitig eine axial vorstehende Wandung, die sich über die gesamte Einbauhöhe des Wälzlagers erstreckt. Am freien Ende hintergreift die Wandung des drehstarren Trägerteils einen radial nach außen gerichteten Bord des zweiten Trägerteils, in das der zweite Lagerring eingesetzt ist. Außenseitig, auf der vom Wälzlager abgewandten Seite des aus Stahlblech geformten Trägerteils stützt sich die Schraubenfeder des Federbeins ab. Das Federbein ist weiterhin mit einem Dämpfungselement zur Erzielung eines elastischen Endanschlages bei einer starken Einfederung versehen, das sich unmittelbar an der Karosserie abstützt.

### Aufgabe der Erfindung

Ausgehend von dem bekannten Stand der Technik liegt der Erfindung die Aufgabe zu Grunde, ein gewichtsoptimiertes, kompaktes Federbeinlager zu schaffen, mit einer verbesserten Steifigkeit sowie reduzierten Herstellkosten.

### Zusammenfassung der Erfindung

Die zuvor genannte Problemstellung wird durch die Merkmale der Erfindung gemaß Anspruch 1 gelöst. Das erfindungsgemäße Federbein für eine Radaufhängung von Fahrzeugen schließt ein Federbeinlager ein, das zwei Trägerteile umfasst, zwischen denen ein Wälzlager angeordnet ist. Vorteilhaft sind beide Trägerteile aus Kunststoff hergestellt, wodurch sich insbesondere ein Gewichtsvorteil gegenüber bislang aus Blech hergestellten Trägerteilen bzw. aus unterschiedlichen Werkstoffen hergestellten Tragerteilen einstellt. Für die Herstellung der Trägerteile, die als Führungsring bzw. als Gehäuse ausgebildet sind, eignet sich bevorzugt ein Spritzgießverfahren, mit dem sich für Großserien ein Kostenvorteil einstellt. Die erfindungsgemäßen Trägerteile sind so konzipiert, dass diese ohne nachteiligen Einfluss auf die Festigkeit ein Optimum hinsichtlich des Gewichts und des Bauraums darstellen. Erfindungsgemäß ist das der Schraubenfeder des Federbeins zugeordnete, als Gehäuse bezeichnete Trägerteil mit Hohlkammern versehen, wodurch sich ein Gewichtsvorteil einstellt. Die Hohlkammern des Trägerteils ermöglichen darüber hinaus in allen Bereichen gleiche Wandstärken, was sich insbesondere auf die Festigkeit auswirkt. Die gleichen Querschnitte vermeiden außerdem ein nachteiliges unterschiedliches Schrumpfungsverhalten und damit die Einhaltung vorgegebener enger Form- und / oder Lagetoleranzen. Als ein geeigneter Kunststoff für die Trägerteile eignet sich bevorzugt PA 66 GF oder PA 66 GB. Auf der zur Schraubenfeder gerichteten Seite ist das als Gehäuse bezeichnete Trägerteil mit einem Führungsansatz sowie einer Abstützfläche für die Schraubenfeder versehen. Die Abstützfläche ist dabei so angeordnet, dass sich eine nahezu geradlinige Krafteinleitung in das Federbeinlager einstellt

Zur Erzielung einer exakten Einbaulage des Wälzlagers ist dieses in beiden Trägerteilen in einer Ringnut bzw. einer Umlaufnut eingesetzt. Sowohl die Ringnut des Führungsrings als auch die Umlaufnut des Gehäuses ist beidseitig von Borden seitlich begrenzt. In der Einbaulage ist das Wälzlager an zumindest einem Bord der Ringnut oder der Umlaufnut zentriert. Eine bevorzugte Einbaulage sieht vor, dass das Wälzlager an einem Bord des Führungsrings und einem Bord des Gehäuses gleichzeitig zentriert ist. Ein weiteres Gestaltungsmerkmal der Erfindung sieht vor, den inneren Bord der Umlaufnut des Gehäuses mit einer Ausnehmung zu versehen, in die der radial innere Bord des Führungsrings im eingebauten Zustand eingreift. Dieser vorteilhafte formschlüssige, spielbehaftete Eingriff beider Borde bewirkt eine labyrinthartige innenseitige Abdichtung des Federbeinlagers, die sich vorteilhaft auf die Lebensdauer auswirkt

Weitere vorteilhafte Ausgestaltungen der Erfindung sind Gegenstand der Ansprüche 2 bis 19

Zur Erzielung einer ausreichenden Führung der Schraubenfeder ist das Gehäuse des Federbeinlagers mit einem Führungsansatz versehen, dessen Länge zumindest die Längserstreckung einer Federwindung übertrifft. Der Endbereich der Schraubenfeder ist dabei mit einem abnehmenden Windungsdurchmesser versehen, wodurch die Schraubenfeder innenseitig an dem Führungsansatz eine Längsführung erhält und gleichzeitig zentriert ist.

In einer weiteren vorteilhaften Ausgestaltung der Erfindung ist das Gehäuse, d. h. der Schraubenfeder zugeordnete Trägerteil, mit einer Ringschulter versehen, die von dem Führungsansatz ausgehend radial nach innen ausgerichtet ist. An der Ringschulter stützt sich ein Dämpfungselement ab, das bei einer starken Einfederung des Fahrzeugs einen elastischen Endanschlag für das Federbein bildet. Vorzugsweise ist die Ringschulter kreisringförmig gestaltet und rechtwinklig zu der Längsachse des Federbeinlagers ausgerichtet. Die Ausbildung der Ringschulter in Verbindung mit dem Führungsansatz eignet sich für eine Lagepositionierung des Dämpfungselementes, das formschlüssig an der Innenwandung des Führungsansatzes gehalten bzw. zentriert ist. Alternativ dazu kann das Dämpfungselement ebenfalls spielbehaftet angeordnet sein, so dass sich ein Ringspalt zwischen der Mantelfläche des Dämpfungselementes und der Innenwandung des Führungsansatzes bildet.

Die Abstützung des Dämpfungselementes an der Ringschulter hat zur Folge, dass auch in Extremsituationen, d. h. bei einer starken Einfederung oder extremen Kurvengeschwindigkeiten, bei der es zu einer Blockanlage des Federbeins kommt, die dabei entstehenden Lenkkräfte nicht extrem ansteigen. Aufgrund der Abstutzung des Dämpfungselementes an der Ringschulter des Gehäuses, welches über ein Wälzlager an dem benachbarten Trägerteil abgestützt ist, stellen sich auch bei einer Blockanlage des Federbeins beherrschbare Lenkkräfte ein.

Die Abstützfläche des Trägerteils bildet einen Anschlag, mit dem in einfacher Weise eine wirksame Verdrehsicherung für die Schraubenfeder erzielbar ist Die Schraubenfeder stützt sich dabei mit einem Federende an dem Anschlag ab und positioniert damit die Schraubenfeder in der Einbaulage. Von dem Anschlag ausgehend steigt die Abstützfläche auf den Umfang bezogen zumindest über einen Winkel von 90° zunehmend kontinuierlich axial an. Dieser Winkelwert kann sich bei Bedarf auf einen Bereich von mehr als 90° erstrecken. Der Anstiegsverlauf an der Abstützfläche bzw. der Steigungswinkel entspricht dabei der Endwindung der Schraubenfeder. Mit dieser Maßnahme kann beispielsweise eine Fehlmontage von Schraubenfedern verhindert werden, die unterschiedlich ausgebildete Federenden aufweisen.

Das der Schraubenfeder zugeordnete Trägerteil bildet außerdem eine Ringschulter, die radial nach innen versetzt zum Führungsansatz angeordnet ist, und an der sich das Dämpfungselement für das Federbein abstützt. Damit übernimmt dieses Trägerteil mehrere Funktionen, was sich insbesondere vorteilhaft auf die Montage der einzelnen Bauteile des Federbeins auswirkt. Aufgrund der Lage der Ringschulter im Gehäuse, die weitestgehend mit der Lage der Abstützfläche für die Schraubenfeder übereinstimmt, kann im Vergleich zu bisherigen Lösungen ein längenreduziertes Dämpfungselement eingesetzt werden, was die kompakte Bauweise der erfindungsgemäßen Federbeinlagerung unterstreicht.

Auf der von der Abstützfläche der Schraubenfeder abgewandten Seite ist das der Schraubenfeder zugeordnete Trägerteil, das Gehäuse, mit einer Umlaufnut versehen, in der ein Wälzlagerring eingepasst ist. Der weitere Lagerring des Wälzlagers ist dem drehfest an der Karosse des Fahrzeugs angeordneten Trägerteils, dem Führungsring zugeordnet. Dazu weist der Führungsring zwei Borde auf, zwischen denen der Wälzlagerring formschlüssig gehalten ist. Beide Borde besitzen eine Längserstreckung, die sich in einer Einbaulage des Führungsrings zumindest bis über die Mitte des Wälzlagers erstrecken.

Der radial innere Bord des Führungsrings greift in dem eingebauten Zustand in eine Ausnehmung ein, die dem als Axiallager ausgelegten Federbeinlager benachbart ist Der radial äußere Bord des Lagerrings ist mit einer Schnappnase versehen, die mit einer Ausnehmung einer äußeren Wandung des Gehauses zur Bildung einer Schnappverbindung zusammenwirkt

Durch die formschlüssige Verbindung der Trägerteile mittels einer zwischen dem Gehäuse und dem Führungsring angeordneten Schnappverbindung ist eine vormontierbare Einheit geschaffen, die alle Bauteile der Federbeinlagerung zusammenfügt. Damit ergibt sich die Möglichkeit, den Fahrzeugherstellern die vormontierte Federbeinlagerung als eine Baueinheit zu liefern, um den Bauteileumfang deutlich reduzieren zu können.

Die zwischen dem Gehäuse und dem Führungsring angeordnete Schnappverbindung kann erfindungsgemäß zusätzlich als eine Labyrinthdichtung ausgelegt werden. Das Federbeinlager ist damit vor einem Eintritt von Verunreinigungen jeglicher Art geschützt, was sich vorteilhaft auf die Lebensdauer, die Standzeit der Lagerung auswirkt.

Das der Schraubenfeder zugeordnete Trägerteil, das Gehäuse ist gemäß der Erfindung mit umfangsverteilt angeordneten Hohlräumen versehen. Die Gestaltung der Hohlräume erfolgt unter dem Gesichtspunkt, möglichst gleiche Querschnitte im Gehäuse zu erzielen. Damit stellt sich ein gleiches Schrumpfungsverhalten des aus Kunststoff hergestellten Gehäuses ein, was sich vorteilhaft auf Form- und Lagetoleranz und allgemein auf die Formgenauigkeit bzw. Fertigungstoleranz des gesamten Gehäuses auswirkt. Die Hohlräume bzw. Hohlkammern bewirken weiterhin einen Gewichtsvorteil ohne nachteiligen Einfluss auf die Festigkeit. Vorzugsweise ist das Gehäuse mit symmetrisch angeordneten Hohlräumen versehen, die jeweils von strahlenförmig auf eine Mitte des Federbeinlagers ausgerichteten Zwischenwänden getrennt sind. Dabei bilden sich jeweils Hohlräume mit einer trapezförmig gestalteten Grundflache. Weiterhin kann jeder Hohlraum mit einer Zwischenwand versehen werden, die eine Aufteilung der Hohlräume in axialer Richtung sicherstellt. Der Gehauseaufbau schließt weiterhin radial zueinander beabstandet angeordnete Hohlkammern ein. Eine weitere Ausbildung sieht vor, dass sich die Hohlräume bis in den Führungsansatz erstrecken, auf dem ein Ende der Schraubenfeder außenseitig anliegt Diese Maßnahme gewährleistet auch in dem konisch zulaufenden Abschnitt des Führungsansatzes eine gleiche Wandstärke zur Erzielung eines einheitlichen Schrumpfungsyerhaltens.

### Kurze Beschreibung der Zeichnungen

Zur Erläuterung der Erfindung dienen einige Ausführungsbeispiele, die nachfolgend erläutert werden. Es zeigen:
- Figur 1: ein erfindungsgemäßes Federbein in einem Längsschnitt;
- Figur 2: die Federbeinlagerung gemäß Figur 1 in einer Einzelteilzeichnung;
- Figur 3: eine zu Figur 2 alternativ gestaltete Federbeinlagerung,
- Figur 4: in einer Ansicht eine Federbeinlagerung, versehen mit einer kontinuierlich ansteigenden Abstützfläche für die Schraubenfeder;
- Figur 5: in einem Längsschnitt das Federbeinlager gemäß Figur 4.

### Detaillierte Beschreibung der Zeichnungen

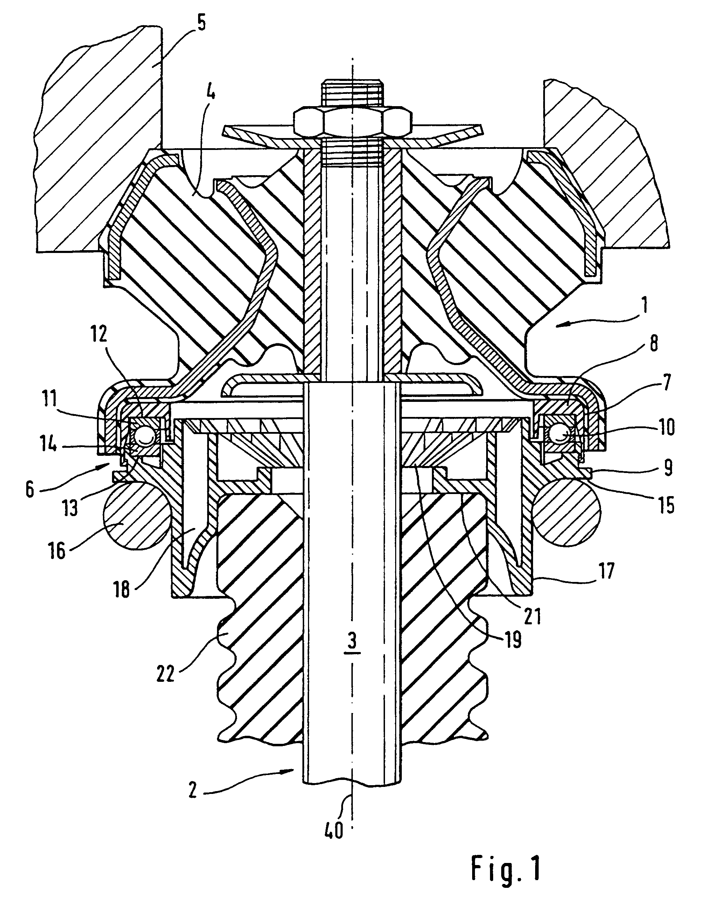

In Figur 1 ist ein Federbein 1 abgebildet, versehen mit einem Stoßdämpfer 2, dessen Kolbenstange 3 über ein elastisches Lager 4 an einer Fahrzeugkarosserie 5 abgestützt ist. Auf der von der Fahrzeugkarosserie 5 abgewandten Seite schließt sich an das Lager 4 ein Federbeinlager 6 an. Das Lager 4 bildet dazu eine Aufnahme 7, in die das Federbeinlager 6 formschlüssig eingepasst ist. Das Federbeinlager 6 wird gebildet unter anderem aus zwei Tragerteilen, einem zum Lager 4 gerichteten Führungsring 8 und einem axial dazu beabstandeten Gehäuse 9, zwischen denen ein Wälzlager 10 angeordnet ist. Ein erster Lagerring 11 ist in einer Ringnut 12 des Führungsrings 8 eingesetzt. Das Gehäuse 9 weist eine Umlaufnut 13 auf, in die der zweite Lagerring 14 eingefügt ist.

Axial versetzt zur Umlaufnut 13 bildet das Gehäuse 9 eine Abstützfläche 15 für eine Schraubfeder 16. Die radial zu einer Längsachse 40 des Federbeins 1 ausgerichtete Abstützfläche 15 geht mittels eines Radius über in einen axial verlaufenden Führungsansatz 17. Der Radius ist dabei dem Radius des Federdrahtdurchmessers der Schraubenfeder 16 angepasst. Die Schraubenfeder 16 ist versehen mit einem konisch verlaufenden Endabschnitt, dessen Endwindungen an dem Außendurchmesser des Führungsansatzes 17 anliegen. Die Anordnung der Abstützfläche 15 an dem Gehäuse 9 ist so angelegt, dass sich nahezu eine geradlinige Krafteinleitung in das Federbeinlager 6 einstellt, wodurch eine Schiefstellung weitestgehend vermieden wird.

Die Tragerteile des Federbeinlagers 6, der Führungsring 8 sowie das Gehäuse 9 sind aus Kunststoff hergestellt und besitzen damit gegenüber herkömmlich gestalteten Federbeinlagern einen Gewichtsvorteil. Das Gehäuse 9 ist dabei mit Hohlkammern 18 versehen, wodurch ein unterschiedliches Schrumpfungsverhalten, hervorgerufen durch Wandstärkenunterschiede, vermieden wird und damit eine hohe Formgenauigkeit erreicht werden kann. Die Hohlkammern 18 sind dabei geometrisch abweichend gestaltet und durch Zwischenwände 19 voneinander getrennt. Vom Führungsansatz 17 radial nach innen zeigend bildet das Gehäuse 9 eine Ringschulter 21, an der sich ein Dämpfungselement 22 abstützt, zur Erzielung eines elastischen Endanschlages für das Federbein 1, beispielsweise bei einem starken Einfedern des Fahrzeugs. Die Gestaltung des Gehauses 9 sieht eine nahezu übereinstimmende axiale Beabstandung der Ringschulter 21 und der Abstützflache 15 zum Wälzlager 10 vor Im Vergleich zu bisher bekannten Federbeinen stellt sich dadurch ein kompaktes Gehause 9 ein sowie ein längenreduziertes Dämpfungselement 22

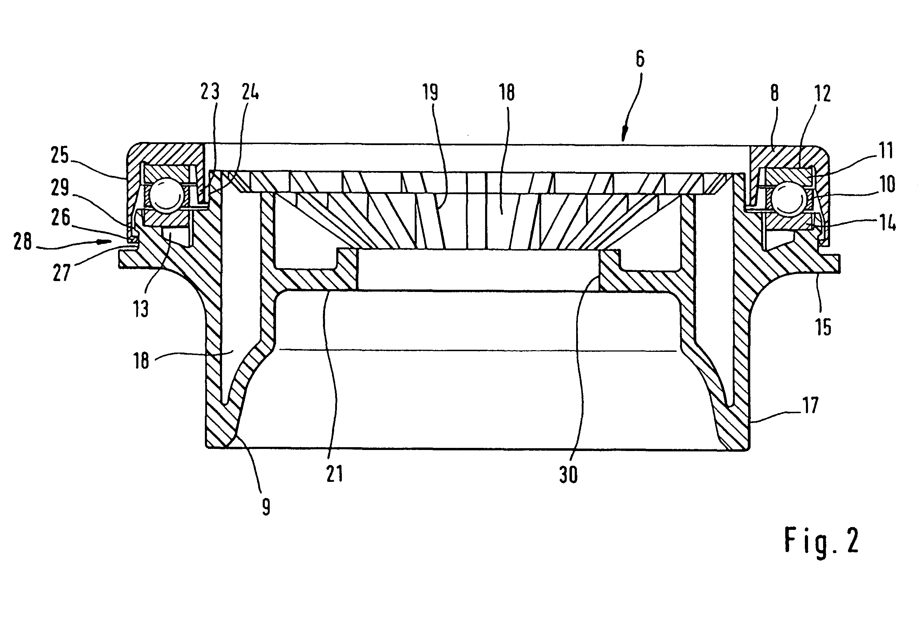

Die Figur 2 zeigt in einer Einzelteilzeichnung das in Figur im eingebauten Zustand abgebildete Federbeinlager 6 Weitere Einzelheiten des Federbeinlagers 6 verdeutlicht die vergrößerte Abbildung des Federbeinlagers 6 gemäß Figur 2. Der Führungsring 8 bildet ein weitestgehend umgekehrt u-förmiges Querschnittsprofil. Ein radial innerer Bord 23 greift in der Einbaulage in eine Ausnehmung 24 des Gehäuses 9. Ein radial äußerer Bord 25 besitzt eine Längserstreckung, die sich über die Einbauhöhe des Wälzlagers 10 erstreckt. Endseitig ist der Bord 25 mit einem radial nach innen gerichteten Vorsprung 26 versehen, der in eine Radialnut 27 des Gehäuses 9 zur Bildung einer Schnappverbindung 28 eingreift. Die axiale Länge des Vorsprungs 26 ermöglicht die Bildung einer Labyrinthdichtung 29 zwischen dem Vorsprung 26 und der Außenkontur des Gehäuses 9. Die Labyrinthdichtung 29 verhindert wirksam den Eintrag von Verunreinigungen in das Federbeinlager 6. Die vergrößerte Abbildung des Federbeinlagers 6 gemäß Figur 2 verdeutlicht weiterhin die strahlenförmige Anordnung der Zwischenwände 19, mit denen die Hohlkammern 18 seitlich begrenzt sind. Erkennbar ist weiterhin die trapezförmige Formgebung der Hohlkammern 18, die symmetrisch umfangsverteilt angeordnet sind und von einer zentrischen zylindrischen Ausnehmung 30 ausgehend, auf eine zentrische Mitte des Gehäuses 9 zeigend ausgerichtet sind.

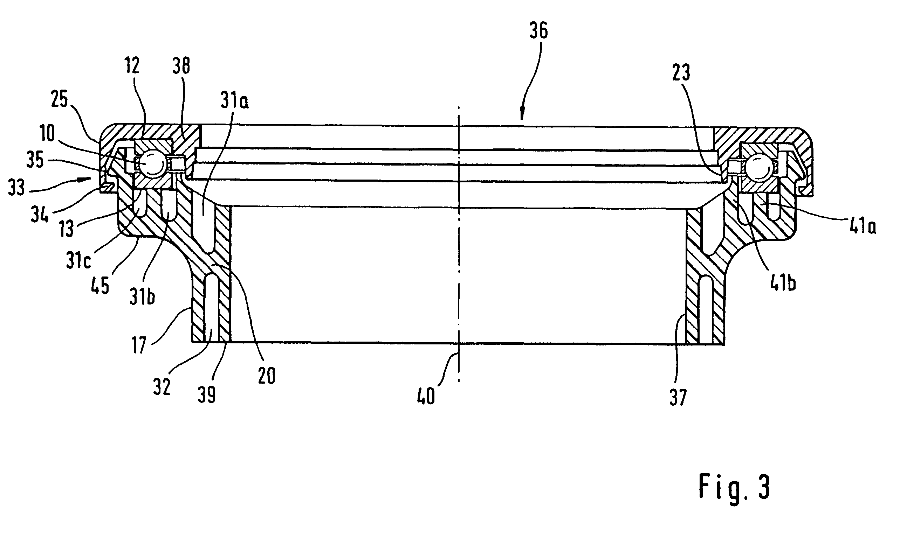

Die Figur 3 zeigt ein Federbeinlager 36, dessen Trägerteile, der Führungsring 38 sowie das Gehäuse 39 mittels einer Schnappverbindung 33 zusammengefügt sind. Dazu ist das Gehäuse 39 mit einer radial ausgerichteten, umlaufenden Nase 35 versehen, die von einem endseitig am Bord 25 des Führungsrings 38 angeordneten, radial nach innen gerichteten Vorsprung formschlüssig hintergreift. Das Gehäuse 39 ist weiterhin im Unterschied zu dem Gehäuse 9 gemäß Figur 2 mit abweichend gestalteten Hohlkammern 31a, 31b, 31c, 32 versehen, die aufgrund einer im Durchmesser größeren zentrischen Ausnehmung 37 im Gehäuse 39 eine abweichende Formgebung aufweisen. Die Hohlkammern 31a bis 31c sind dazu konzentrisch um die Längsachse 40 des Federbeinlagers 36 angeordnet und jeweils durch eine umlaufend angeordnete Zwischenwand 41a, 41b getrennt. An die Hohlkammer 31a schließt sich in axialer Richtung die Hohlkammer 32 an, zwischen denen eine Trennwand 20 vorgesehen ist.

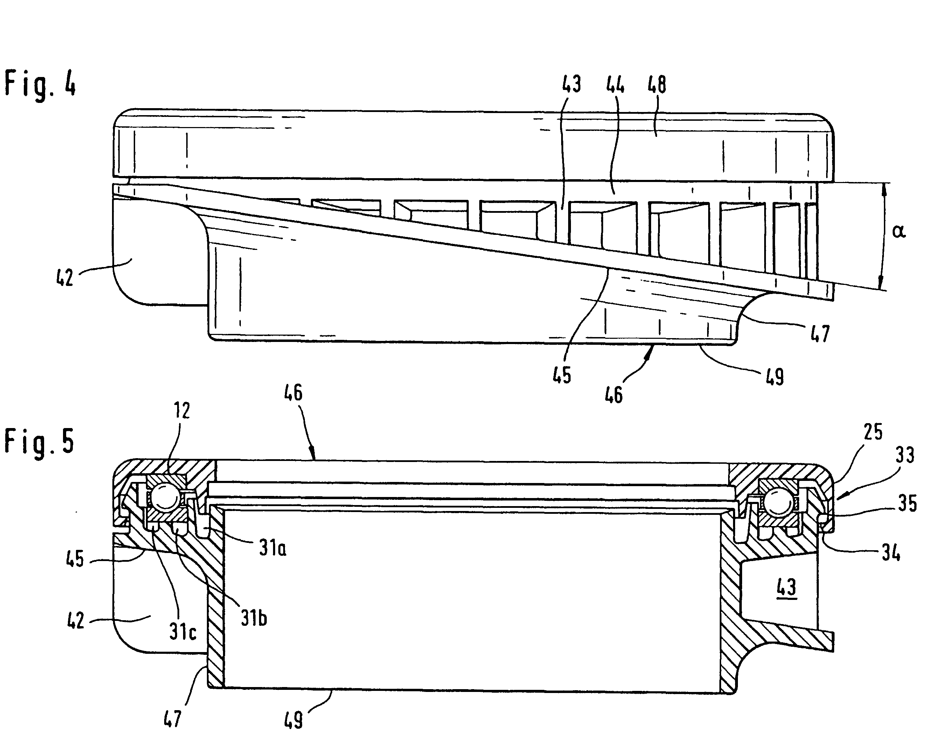

Ein weiteres alternativ gestaltetes Federbeinlager 46 zeigen die Figuren 4 und 5. Das Gehäuse 49 ist dabei mit einer von einem Anschlag 42 ausgehenden, axial kontinuierlich ansteigenden Abstützfläche 45 versehen, an der sich die Schraubenfeder 16 abstützt. Der Anschlag 42 bildet im eingebauten Zustand eine Drehfixierung für die Schraubenfeder 16. Der Winkel "α", unter dem die Abstützfläche 45 axial ansteigend verläuft, ist dabei angepasst an die Gestaltung bzw. dem Verlauf der Endwindung von der Schraubfeder 16. Die von dem Anschlag 42 ausgehende, schraubenlinienförmig axial vom Wälzlager 10 abhebende Abstützfläche 45 ist dabei durch beabstandet angeordnete Stege 43 mit dem Ringabschnitt 44 des Gehäuses 49 verbunden. Der Führungsring 48 und das Gehäuse 49 sind durch eine Schnappverbindung 33 verbunden, zur Bildung einer vormontierbaren, alle Einzelteile des Federbeinlagers 46 beinhaltenden Einheit.

### Bezugszahlenliste

- 1: Federbein
- 2: Stoßdämpfer
- 3: Kolbenstange
- 4: Lager
- 5: Fahrzeugkarosserie
- 6: Federbeinlager
- 7: Aufnahme
- 8: Führungsring
- 9: Gehäuse
- 10: Wälzlager
- 11: Lagerring
- 12: Ringnut
- 13: Umlaufnut
- 14: Lagerring
- 15: Abstützfläche
- 16: Schraubenfeder
- 17: Führungsansatz
- 18: Hohlkammer
- 19: Zwischenwand
- 20: Trennwand
- 21: Ringschulter
- 22: Dämpfungselement
- 23: Bord
- 24: Ausnehmung
- 25: Bord
- 26: Vorsprung
- 27: Radialnut
- 28: Schnappverbindung
- 29: Labyrinthdichtung
- 30: Ausnehmung
- 31a: Hohlkammer
- 31b: Hohlkammer
- 31c: Hohlkammer
- 32: Hohlkammer
- 33: Schnappverbindung
- 34: Vorsprung
- 35: Nase
- 36: Federbeinlager
- 37: Ausnehmung
- 38: Führungsring
- 39: Gehäuse
- 40: Längsachse
- 41: Zwischenwand
- 42: Anschlag
- 43: Steg
- 44: Ringabschnitt
- 45: Abstützfläche
- 46: Federbeinlager
- 47: Führungsansatz
- 48: Führungsring
- 49: Gehäuse

## Patentansprüche

1. Federbein für eine Radaufhängung in Fahrzeugen, umfassend einen Stoßdämpfer (2) und eine den Stoßdämpfer (2) zumindest teilweise koaxial umschließende Schraubenfeder (16), die mit einem Federende an einer Federauflage des Stoßdämpfers (2) und mit dem weiteren Federende mittelbar an einem Federbeinlager (6, 36, 46) abgestützt ist, wobei das Federbeinlager (6, 36, 46) zwei Trägerteile umfasst, zwischen denen ein Wälzlager (10) angeordnet ist, ein erstes als Führungsring (8, 38, 48) ausgebildetes, einer Fahrzeugkarosserie (5) zugeordnetes Trägerteil, sowie als zweites Trägerteil ein Hohlkammern (18, 31a bis 31c, 32) aufweisendes, einteiliges Gehäuse (9, 39, 49), das den Stoßdämpfer (2) teilweise konzentrisch umschließt und einen Führungsansatz (17, 47) sowie eine Abstützfläche (15, 45) für die Schraubenfeder (16) aufweist, **dadurch gekennzeichnet, dass** die Trägerteile, der Führungsring (8, 38, 48) und das Gehäuse (9, 39, 49) aus Kunststoff hergestellt sind, wobei zur Aufnahme des Wälzlagers (10) der Führungsring (8, 38, 48) eine beidseitig von Borden (23, 25) seitlich begrenzte Ringnut (12) und das Gehäuse (9, 39, 49) eine beidseitig von Borden begrenzte Umlaufnut (13) aufweist, wobei das Wälzlager (10) an zumindest einem Bord zentriert ist und ein radial innerer Bord des Führungsrings (8, 48) in eine Ausnehmung (24) von dem inneren Bord der Umlaufnut (13) des Gehäuses (9) eingreift.

2. Federbein nach Anspruch 1, wobei ein Endbereich der Schraubenfeder (16) mit einem abnehmenden Windungsdurchmesser den Führungsansatz (17, 47) des Gehäuses (9, 39, 49) außen umschließt.

3. Federbein nach Anspruch 2, dessen Führungsansatz (17) eine Längserstreckung aufweist, die zumindest eine Federwindung der Schraubenwindung (16) übertrifft.

4. Federbein nach Anspruch 1, bei dem das Gehäuse (9) mit einer Ringschulter (21) versehen ist, die von dem Führungsansatz (17) ausgehend nach innen umlaufend ausgerichtet ist.

5. Federbein nach Anspruch 4, bei dem die Ringschulter (21) kreisringförmig gestaltet und rechtwinklig zu einer Längsachse (40) des Federbeinlagers (6) verläuft.

6. Federbein nach Anspruch 4, dessen Ringschulter (21) zur Abstützung eines Dämpfungselementes (22) vorgesehen ist, das formschlüssig an einer innenwandung des Führungsansatzes (17) gehalten oder spielbehaftet im Führungsansatz (17) eingesetzt ist.

7. Federbein nach Anspruch 4, wobei die Lage der Ringschulter (21) im Gehäuse (9) weitestgehend mit einer axialen Lage der Abstützfläche (15) für die Schraubenfeder (16) übereinstimmt.

8. Federbein nach Anspruch 1, dessen Gehäuse (49) eine Abstützfläche (45) mit einem Anschlag (42) aufweist, an dem ein Federende der Schraubenfeder (16) in einer Einbaulage drehfixiert ist.

9. Federbein nach Anspruch 8, dessen Abstützfläche (45) von dem Anschlag (42) ausgehend auf einen Umfang bezogen uber zumindest 90° kontinuierlich uber einen Winkel (α) axial ansteigt.

10. Federbein nach Anspruch 9, wobei ein Anstieg der Abstützfläche (45) mit einer Windungsrichtung der Schraubenfeder (16) übereinstimmt.

11. Federbein nach Anspruch 1, wobei die zur Aufnahme eines Lagerringes (14) des Federbeinlagers (6, 36, 46) bestimmte Umlaufnut (13) auf der von der Abstützfläche (15, 45) für die Schraubenfeder (16) abgewandten Seite des Gehäuses (9, 39, 49) eingebracht ist.

12. Federbein nach Anspruch 1 , bei dem der radial äußere Bord (25) einen radial nach innen gerichteten Vorsprung (26) aufweist, der in eine Radialnut (27) einer äußeren Wandung des Gehäuses (9) eingreift zur Bildung einer Schnappverbindung (28).

13. Federbein nach Anspruch 1, bei dem alle Bauteile des Federbeinlagers (6) mittels der zwischen dem Gehäuse (9) und dem Führungsring (8) angeordneten Schnappverbindung (28) als eine vormontierbare Einheit zusammengefasst sind.

14. Federbein nach Anspruch 13, wobei die zwischen dem Gehäuse (9) und dem Führungsring (8) vorgesehene Schnappverbindung (28) gleichzeitig die Funktion einer Labyrinthdichtung (29) übernimmt.

15. Federbein nach Anspruch 1, dessen Gehäuse (9, 39, 29) mit symmetrisch angeordneten Hohlkammern (18, 31a bis 31c, 32) versehen ist.

16. Federbein nach Anspruch 15, bei dem die Hohlkammern (31a bis 31c) des Gehäuses (39) radial beabstandet angeordnet sind.

17. Federbein nach Anspruch 15, wobei die Hohlkammern (18) von strahlenförmig ausgerichteten Zwischenwanden (19) getrennt sind zur Bildung von trapezförmig gestalteten Hohlkammern (18).

18. Federbein nach Anspruch 15, wobei das Gehäuse (39) Trennwände (20) aufweist, die eine axiale Aufteilung der Hohlkammern (31a und 32) sicherstellen.

19. Federbein nach Anspruch 15, dessen Hohlkammern (18) sich axial bis in den Führungsansatz (17) erstrecken.

## Claims

1. Suspension strut for a wheel suspension in vehicles, comprising a shock absorber (2) and a helical spring (16) which surrounds the shock absorber (2) at least partially coaxially and which is supported with one spring end on a spring support of the shock absorber (2) and with the further spring end indirectly on a suspension strut bearing (6, 36, 46), the suspension strut bearing (6, 36, 46) comprising two carrier parts, between which a rolling bearing (10) is arranged, a first carrier part designed as a guide ring (8, 38, 48) and assigned to a vehicle body (5) and, as the second carrier part, a one-part housing (9, 39, 49) which has hollow chambers (18, 31a to 31c, 32) and which surrounds the shock absorber (2) partially concentrically and which has a guide extension (17, 47) and a supporting surface (15, 45) for the helical spring (16), **characterized in that** the carrier parts, the guide ring (8, 38, 48) and the housing (9, 39, 49) are produced from plastic, for the reception of the rolling bearing (10) the guide ring (8, 38, 48) having an annular groove (12) delimited laterally on both sides by rims (23, 25) and the housing (9, 39, 49) having a peripheral groove (13) delimited on both sides by rims, the rolling bearing (10) being centred at at least one rim, and a radially inner rim of the guide ring (8, 48) engaging into a recess (24) of the inner rim of the peripheral groove (13) of the housing (9).

2. Suspension strut according to Claim 1, an end region of the helical spring (16), with a decreasing turn diameter, surrounding the guide extension (17, 47) of the housing (9, 39, 49) on the outside.

3. Suspension strut according to Claim 2, the guide extension (17) of which has a longitudinal extent which exceeds at least one spring turn of the helical spring (16).

4. Suspension strut according to Claim 1, in which the housing (9) is provided with an annular shoulder (21) which, emanating from the guide extension (17), is oriented peripherally inwards.

5. Suspension strut according to Claim 4, in which the annular shoulder (21) is configured in the form of a circular ring and runs at right angles to a longitudinal axis (40) of the suspension strut bearing (6).

6. Suspension strut according to Claim 4, the annular shoulder (21) of which is provided for supporting a damping element (22) which is held positively on an inner wall of the guide extension (17) or is inserted with play in the guide extension (17).

7. Suspension strut according to Claim 4, the position of the annular shoulder (21) in the housing (9) coinciding as far as possible with an axial position of the supporting surface (15) for the helical spring (16).

8. Suspension strut according to Claim 1, the housing (49) of which has a supporting surface (45) with a stop (42) at which a spring end of the helical spring (16) is fixed rotationally in an installation position.

9. Suspension strut according to Claim 8, the supporting surface (45) of which, emanating from the stop (42), rises axially continuously through an angle (α) over at least 90° with respect to a circumference.

10. Suspension strut according to Claim 9, a rise of the supporting surface (45) coinciding with a turn direction of the helical spring (16).

11. Suspension strut according to Claim 1, the peripheral groove (13) intended for receiving a bearing ring (14) of the suspension strut bearing (6, 36, 46) being introduced on that side of the housing (9, 39, 49) which faces away from the supporting surface (15, 45) for the helical spring (16).

12. Suspension strut according to Claim 1, in which the radially outer rim (25) has a radially inward-directed projection (26) which engages into a radial groove (27) of an outer wall of the housing (9) in order to form a snap connection (28).

13. Suspension strut according to Claim 1, in which all the components of the suspension strut bearing (6) are combined as a preassemblable unit by means of the snap connection (28) arranged between the housing (9) and the guide ring (8).

14. Suspension strut according to Claim 13, the snap connection (28) provided between the housing (9) and the guide ring (8) assuming at the same time the function of a labyrinth seal (29).

15. Suspension strut according to Claim 1, the housing (9, 39, 49) of which is provided with symmetrically arranged hollow chambers (18, 31a to 31c, 32).

16. Suspension strut according to Claim 15, in which the hollow chambers (31a to 31c) of the housing (39) are arranged so as to be spaced apart radially.

17. Suspension strut according to Claim 15, the hollow chambers (18) being separated by intermediate walls (19) oriented in a radiating manner, in order to form hollow chambers (18) of trapezoidal configuration.

18. Suspension strut according to Claim 15, the housing (39) having partitions (20) which ensure an axial division of the hollow chambers (31a and 32).

19. Suspension strut according to Claim 15, the hollow chambers (18) of which extend axially into the guide extension (17).

## Revendications

1. Jambe de force pour une suspension de roue dans des véhicules automobiles, comprenant un amortisseur (2) et un ressort à boudin (16) entourant au moins partiellement et coaxialement l'amortisseur (2), lequel est supporté à une extrémité de ressort sur un appui de ressort de l'amortisseur (2) et à l'autre extrémité de ressort de manière indirecte sur un palier de jambe de force (6, 36, 46), le palier de jambe de force (6, 36, 46) comprenant deux parties de support entre lesquelles est disposé un palier à roulement (10), une première partie de support associée à une carrosserie (5) de véhicule, réalisée sous forme de bague de guidage (8, 38, 48), ainsi qu'un boîtier en une seule partie (9, 39, 49) en tant que deuxième partie de support présentant des chambres creuses (18, 31a à 31c, 32), qui entoure l'amortisseur (2) partiellement de manière concentrique et qui présente une saillie de guidage (17, 47) ainsi qu'une surface d'appui (15, 45) pour le ressort à boudin (16), **caractérisée en ce que** les parties de support, la bague de guidage (8, 38, 48) et le boîtier (9, 39, 49) sont fabriqués en plastique, la bague de guidage (8, 38, 48) présentant une rainure annulaire (12) limitée latéralement des deux côtés par des bords (23, 25) pour recevoir le palier à roulement (10) et le boîtier (9, 39, 49) présentant une rainure périphérique (13) limitée des deux côtés par des bords, le palier à roulement (10) étant centré au niveau d'au moins un bord et un bord radialement interne de la bague de guidage (8, 48) venant en prise dans un évidement (24) du bord interne de la rainure périphérique (13) du boîtier (9).

2. Jambe de force selon la revendication 1, dans laquelle une région d'extrémité du ressort à boudin (16) avec un diamètre d'enroulement décroissant entoure à l'extérieur la saillie de guidage (17, 47) du boîtier (9, 39, 49).

3. Jambe de force selon la revendication 2, dont la saillie de guidage (17) présente une étendue en longueur qui dépasse au moins une spire du ressort de l'enroulement hélicoïdal (16).

4. Jambe de force selon la revendication 1, dans laquelle le boîtier (9) est pourvu d'un épaulement annulaire (21) qui est orienté de manière périphérique vers l'intérieur en partant de la saillie de guidage (17).

5. Jambe de force selon la revendication 4, dans laquelle l'épaulement annulaire (21) est configuré en forme de bague circulaire et s'étend à angle droit par rapport à un axe longitudinal (40) du palier de jambe de force (6).

6. Jambe de force selon la revendication 4, dont l'épaulement annulaire (21) est prévu pour supporter un élément d'amortissement (22) qui est maintenu par engagement par coopération de forme sur une paroi interne de la saillie de guidage (17) ou qui est inséré avec jeu dans la saillie de guidage (17).

7. Jambe de force selon la revendication 4, dans laquelle la position de l'épaulement annulaire (21) dans le boîtier (9) coïncide essentiellement avec une position axiale de la surface d'appui (15) pour le ressort à boudin (16).

8. Jambe de force selon la revendication 1, dont le boîtier (49) présente une surface d'appui (45) avec une butée (42), sur laquelle une extrémité du ressort à boudin (16) est fixée de manière non rotative dans une position de montage.

9. Jambe de force selon la revendication 8, dont la surface d'appui (45) monte axialement en continu d'un angle (α) depuis la butée (42) sur au moins 90° de la périphérie.

10. Jambe de force selon la revendication 9, dans laquelle une augmentation de la surface d'appui (45) coïncide avec un sens d'enroulement du ressort à boudin (16).

11. Jambe de force selon la revendication 1, dans laquelle la rainure périphérique (13) prévue pour recevoir une bague annulaire (14) du palier de jambe de force (6, 36, 46) est pratiquée sur le côté du boîtier (9, 39, 49) opposé à la surface d'appui (15, 45) pour le ressort à boudin (16).

12. Jambe de force selon la revendication 1, dans laquelle le bord radialement extérieur (25). présente une saillie (26) orientée radialement vers l'intérieur, qui vient en prise dans une rainure radiale (27) d'une paroi extérieure du boîtier (9) pour former une connexion par encliquetage (28).

13. Jambe de force selon la revendication 1, dans laquelle tous les composants du palier de jambe de force (6) sont assemblés sous forme d'une unité prémontable au moyen de la connexion par encliquetage (28) disposée entre le boîtier (9) et la bague de guidage (8).

14. Jambe de force selon la revendication '13, dans laquelle la connexion par encliquetage (28) prévue entre le boîtier (9) et la bague de guidage (8) a également la fonction d'un joint à labyrinthe (29).

15. Jambe de force selon la revendication 1, dont le boîtier (9, 39, 49) est pourvu de chambres creuses (18, 31a à 31c, 32) disposées symétriquement.

16. Jambe de force selon la revendication 15, dans laquelle les chambres creuses (31a à 31c) du boîtier (39) sont disposées de manière espacée radialement.

17. Jambe de force selon la revendication 15, dans laquelle les chambres creuses (18) sont séparées par des parois intermédiaires orientées en forme de rayons pour la formation de chambres creuses (18) configurées en forme trapézoïdale.

18. Jambe de force selon la revendication 15, dans laquelle le boîtier (39) présente des parois de séparation (20) qui assurent une division axiale des chambres creuses (31a et 32).

19. Jambe de force selon la revendication 15, dont les chambres creuses (18) s'étendent axialement jusque dans la saillie de guidage (17).
